Europäisches Patentamt

(19) European Patent Office

Office européen des brevets

(11) Numéro de publication : **0 020 232 B1**

(12) **FASCICULE DE BREVET EUROPÉEN**

(45) Date de publication du fascicule du brevet :
20.02.85

(51) Int. Cl.⁴ : **F 16 L   3/04**, F 16 L   1/04

(21) Numéro de dépôt : **80400689.8**

(22) Date de dépôt : **19.05.80**

(54) **Procédé et dispositif d'ancrage de canalisations, telles que des pipe-lines sur fond sous-marin.**

(30) Priorité : 23.05.79 FR 7913123
29.10.79 FR 7926736
07.11.79 FR 7927459

(43) Date de publication de la demande :
10.12.80 Bulletin 80/25

(45) Mention de la délivrance du brevet :
20.02.85 Bulletin 85/08

(84) Etats contractants désignés :
DE FR GB IT NL SE

(56) Documents cités :
GB-A- 1 488 480
US-A- 1 340 083
US-A- 2 864 633
US-A- 2 977 405
US-A- 3 810 364
US-A- 3 861 158
THE OIL AND GAS JOURNAL, 12 décembre 1966,
pages 87-96 Tulsa, Oklahoma, U.S.A. "High costs, in
time and money, emphasize continuous operation"

(73) Titulaire : **COYNE ET BELLIER Bureau d'Ingénieurs Conseils**
**5 rue d'Héliopolis**
**F-75017 Paris (FR)**

(72) Inventeur : **Cour, Francis Raymond Claude**
**34 avenue François Mansart**
**F-78600 Maisons-Laffitte (FR)**

(74) Mandataire : **Lepeudry-Gautherat, Thérèse et al**
**Cabinet Armengaud Jeune Casanova, Akerman,**
**Lepeudry 23 boulevard de Strasbourg**
**F-75010 Paris (FR)**

Jouve, 18, rue St-Denis, 75001 Paris, France

## Description

La présente invention a pour objet un procédé d'ancrage de canalisations telles que des pipe-lines, en particulier mais non exclusivement, sur des fonds sous-marins et un dispositif permettant la mise en œuvre dudit procédé.

On sait que dans certaines régions du globe les canalisations oléoducs ou pipe-lines immergés sont soumis à des courants importants qui peuvent éventuellement amener des déplacements des canalisations ce qui se traduit par des tensions mécaniques à l'intérieur de celles-ci, tensions mécaniques qui peuvent produire des amorces de rupture. Il est donc souhaitable d'ancrer lesdites canalisations sur le fond sous-marin lui-même.

Une première difficulté provient de ce que les travaux doivent être effectués sous l'eau par du personnel équipé de moyens de plongée. Lorsque la profondeur de la mer n'excède pas une cinquantaine de mètres environ, les personnels procédant à l'ancrage peuvent être munis d'équipements autonomes de plongée. Il n'en va pas de même lorsque la profondeur excède une cinquantaine de mètres et, dans les deux cas il est souhaitable de réduire les opérations à effectuer en immersion.

Une seconde difficulté provient de ce que le fond sous-marin peut présenter différentes configurations, la nature même du fond pouvant varier et être constituée en partie par une couche de sable très épaisse, en partie par une couche de sable de faible épaisseur, le reste du parcours étant par exemple un fond rocheux.

Une troisième difficulté rencontrée dans certaines régions du globe et plus particulièrement au Moyen Orient résulte de ce que des réseaux de canalisations sont susceptibles de se croiser. Il importe donc qu'au point de croisement deux canalisations ne viennent pas en contact l'une avec l'autre.

En ce qui concerne cette troisième difficulté, il a été proposé dans le brevet des Etats-Unis d'Amérique N° 3 861 158 d'interposer au point de croisement d'un pipe-line inférieur et d'un pipe-line supérieur immergés une structure en matière élastomère qui vient envelopper le pipe-line inférieur et sur laquelle repose le pipe-line supérieur. Cette structure comprend des moyens pour introduire un ciment durcissable à l'intérieur de la poche formée ce qui permet de déterminer au moins en partie la forme de ladite structure. Celle-ci est par ailleurs ancrée sur le fond sous-marin et est équipée de moyens de fixation du pipe-line supérieur. Toutefois, la surface importante de ces structures se traduit lorsqu'il existe un fort courant par des pressions considérables ce qui tend à déplacer et à déformer l'ensemble des deux pipe-lines.

Dans le souci de remédier aux irrégularités du sol dans le cas d'un pipe-line qui est construit sur la terre ferme, le brevet des Etats-Unis d'Amérique N° 3 734 138 prévoit de poser ledit pipe-line sur des piliers dont chacun consiste en un sac de caoutchouc ou analogue rempli avec un matériau fluide tel que de la mousse de styrène, du sable ou analogue. Compte tenu de l'élasticité de l'enveloppe dans laquelle est introduit un agent de remplissage, les piliers peuvent épouser les irrégularités du sol. La surface importante des sacs leur permet par ailleurs de maintenir le pipe-line lorsqu'ils sont remplis de matériaux à faible densité même lorsque le sol devient boueux.

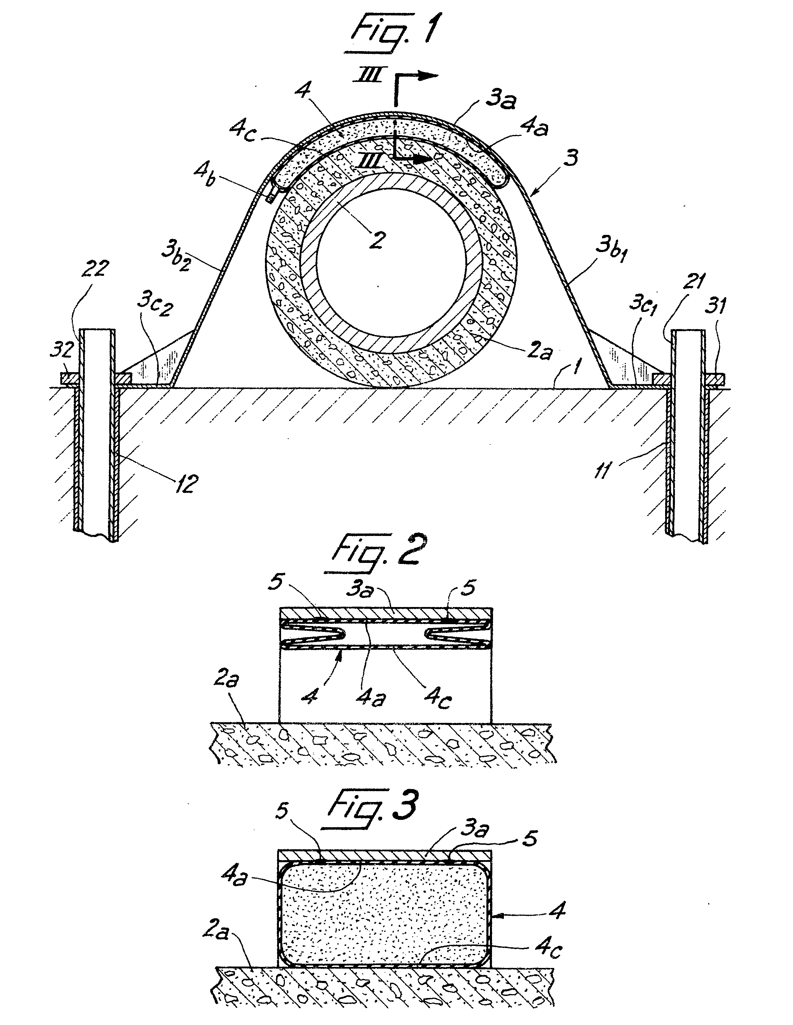

L'article tiré de la revue « The oil and gaz Journal » (use of anchors — page 88, colonne du milieu et les trois premières lignes de la page 90, figure 1 et sa légende page 88, article publicitaire figurant en page 95) montre un arceau solidaire de la conduite, muni de brides de coopération avec des pieux solidaires du sol.

Une application plus particulière de ce système peut être faite au niveau des points de croisement des conduites, car les conduites peuvent être aussi bien supportées qu'appliquées vers le fond. Ceci est obtenu en utilisant un arceau inférieur ainsi qu'un arceau supérieur, comme cela est représenté sur la figure 1 afin d'assurer une séparation permanente entre les deux conduites qui se croisent. Cependant aucune précision n'est donnée sur le montage de ces éléments, qui s'ils comprennent des arceaux inférieurs doivent utiliser impérativement des arceaux supérieurs. En outre aucun déplacement relatif de la conduite par rapport à l'arceau n'est possible ni prévu.

Enfin le brevet GB-A-1 488 480 a pour objet un dispositif et un procédé pour soutenir une portion de conduite à une certaine hauteur au-dessus d'un fond sous-marin, ce qui peut être nécessaire pour croiser une autre conduite ou pour traverser un creux dans le fond sous-marin.

Selon ce procédé, il y a une élévation de la conduite par appui sur des supports, disposés longitudinalement de part et d'autre de celle-ci. L'élévation se produit entre d'une part un portique constitué par quatre pieux inclinés et deux poutres longitudinales et latérales bridées sur les pieux, et d'autre part un berceau entourant la partie inférieure de la conduite, sans mouvement relatif entre la conduite et le berceau.

Ces dispositifs ne permettent pas d'obtenir un ancrage ferme dans le sol susceptible de maintenir les canalisations à l'encontre des différents courants qui peuvent s'exercer sur celles-ci, ou d'assurer de manière sûre cet ancrage à l'endroit de croisement de ce nouveau pipe-line avec un précédent.

La présente invention a pour objet de résoudre ce problème et de présenter une solution réduisant au maximum le nombre d'opérations à effectuer tout en assurant une bonne fixation de la canalisation sur le sol.

A cet effet l'invention a pour objet un procédé d'ancrage de canalisations telles que des pipe-lines, par rapport à des sols, en particulier des fonds sous-marins, au moyen d'arceaux destinés chacun à entourer au moins une partie de la périphérie d'une canalisation et à être relié à un sol par des pieux destinés à être fixés dans le sol, qui consiste successivement, à chaque point d'ancrage,

— à forer des trous d'ancrage dans le sol de part et d'autre de chaque canalisation,

— à sceller des pieux dans lesdits trous,

— à disposer, autour d'au moins une partie de la périphérie de la canalisation une partie médiane cintrée d'au moins un arceau muni de moyens de fixation latéraux, et à disposer un corps gonflable (4) à l'état dégonflé entre la canalisation et ladite partie cintrée de chaque arceau,

— à fixer les moyens de fixation latéraux de chaque arceau (3) auxdits pieux, et

— à injecter un produit de remplissage, qui peut être solidifiable, dans ledit corps gonflable afin d'obtenir un effet de vérin qui déplace la canalisation par rapport au sol, aux pieux et à chaque arceau, dans sa position d'ancrage, soit vers le sol, soit dans le sens opposé selon que la concavité de l'arceau est dirigée vers le bas ou vers le haut.

D'autres caractéristiques et avantages de l'invention apparaîtront au cours de la description qui va suivre de modes de réalisation particuliers, donnés uniquement à titre d'exemple non limitatif au regard des figures qui représentent :

la figure 1, une coupe par un plan transversal d'un pipe-line ancré sur un fond sous-marin par des arceaux avec interposition de corps gonflables ;

les figures 2 et 3, des vues schématiques en coupe selon la ligne III-III de la figure 1, respectivement lorsque le corps gonflable est vide et lorsqu'il est rempli ;

la figure 4 une variante du même mode de réalisation ;

la figure 5 est une coupe par un plan transversal d'un pipe-line ancré sur un fond rocheux surmonté d'une épaisseur de sable relativement faible ;

la figure 6 est une vue en perspective d'une variante de ce mode de réalisation ;

la figure 7 est une vue en coupe à un plan transversal du mode de réalisation représenté sur la figure 6 ;

les figures 8 à 13 des schémas représentant la pose et les mouvements que prennent la canalisation et son dispositif d'ancrage au cours du temps ;

la figure 14 une vue en perspective d'un autre mode de réalisation ;

la figure 15 une vue du croisement de deux pipe-lines et de leur procédé d'ancrage selon l'invention ;

la figure 16 une vue en coupe d'un ancrage selon un plan perpendiculaire au pipe-line supérieur ;

la figure 17 une vue en coupe d'un autre mode de réalisation ;

la figure 18 une vue en perspective du croisement de deux pipe-lines dans lequel le pipe-line supérieur est supporté par un ensemble de dispositifs d'ancrage selon l'invention ;

la figure 19 une vue en coupe de l'ensemble de la figure 3 selon un plan perpendiculaire au pipe-line inférieur.

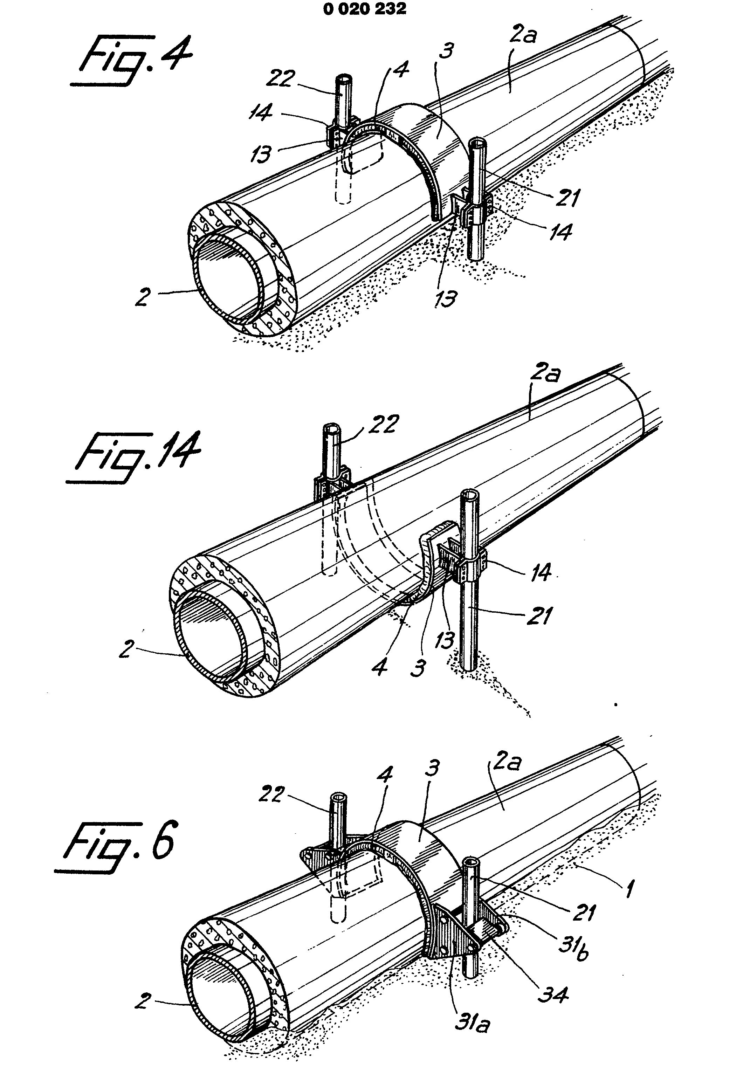

Comme il a été dit précédemment, la nature du fond sous-marin peut varier et le mode de réalisation qui est représenté sur les figures 1 à 4 se rapporte au cas où le fond est de nature stable, cas que l'on rencontre par exemple sur les plates-formes rocheuses. Sur la figure 1, 1 désigne un fond sous-marin dur, la référence 2 une conduite par exemple en acier revêtu d'une coque de béton 2a. Autour de la conduite 2 est disposé un arceau 3 constitué par un élément de bande métallique, notamment d'acier comportant une partie médiane 3a cintrée suivant un rayon un peu supérieur au demi-diamètre extérieur de la conduite 2, 2a, deux parties droites ou sensiblement droites 3b1 et 3b2 et deux extrémités, 3c1 et 3c2, pliées vers l'extérieur de l'arceau 3 de façon à être sensiblement parallèles au fond 1. Dans la concavité de l'arceau 3, et notamment dans sa partie médiane 3a, est fixée l'une des parois 4a d'un corps gonflable 4 qui dans l'exemple de réalisation illustré se présente sous la forme d'un soufflet dont les plis latéraux s'étendent dans une direction (curviligne) sensiblement parallèles à la partie incurvée 3a de l'arceau 3. Les parois de ce soufflet sont constituées en une matière souple, extensible ou non et leurs surfaces extérieures sont au moins en partie en une matière résistant bien à l'eau de mer. Il peut s'agir par exemple d'une matière synthétique appropriée ou bien de caoutchouc. Les moyens de fixation 4a du corps gonflable 4 sur la partie concave 3a de l'arceau sont matière à option ; ils ont été désignés par la référence 5 sur les figures 2 et 3. Il peut s'agir de petites couches d'un adhésif approprié, de rivets étanches, etc... Comme cela apparaît sur la figure 1, le corps gonflable 4 fixé dans la concavité de l'arceau 3 s'étend sur une partie au moins de sa partie médiane cintrée 3a et de préférence sur toute la longueur de cette partie médiane 3a et il est muni à l'une de ses extrémités d'une valve 4b permettant d'y injecter un produit solidifiable tel qu'un coulis de ciment par exemple.

Un dispositif selon la présente invention est utilisé de la façon suivante :

Les différents éléments de conduite 2-2a ayant été assemblés et posés sur le fond sous-marin 1 par des moyens connus, qu'il n'est pas nécessaire de décrire, une machine spéciale prenant appui sur le fond sous-marin 1 procède de part et d'autre de ladite conduite et en des endroits adéquats aux forages de paires de trous d'ancrage tels que 11 et 12 et au garnissage des parois intérieures desdits forages avec une mince couche de ciment. Chaque arceau métallique tel que 3 est alors descendu de la barge qui se trouve à la surface et guidé de manière à ce que sa partie médiane cintrée 3a vienne chevaucher la conduite 2-2a sans qu'il y ait contact entre cette dernière et la cloison inférieure 4c du soufflet 4 qui est alors vide comme cela est représenté sur la figure 2. L'arceau 3 repose alors sur le fond 1 par ses extrémités repliées 3c1 et 3c2 qui sont disposées de telle façon que les larges ouvertures qu'elles présentent dégagent entièrement les extrémités des forages 11 et 12. Des pieux 21, 22, notamment des tubes d'acier, près des extrémités supérieures desquels sont soudées des brides annulaires 31 et 32, sont alors engagés, par leurs extrémités inférieures, dans les ouvertures mentionnées des extrémités 3c1 et 3c2 de l'arceau 3, puis enfoncés dans des forages 11 et 12 jusqu'à ce que lesdites brides 31 et 32 serrent étroitement lesdites extrémités 3c1 et 3c2 de l'arceau 3 contre le fond 1. La prise du ciment interposé entre les parois intérieures des forages 11 et 12 et les pieux correspondants 21 et 22 assure l'ancrage définitif desdits pieux. La seule opération manuelle que doit alors effectuer le scaphandrier consiste à raccorder à la valve d'injection 4b du soufflet 4, l'embout d'un tuyau d'injection de coulis (non représenté sur les figures), l'autre extrémité de ce tuyau étant raccordée sur la barge à un appareil d'injection d'un type connu. Il est remarquable que cette seule opération manuelle demandée au scaphandrier, n'exige aucun effort physique, ni même aucun effort d'attention et qu'elle est en outre très rapide. Le coulis qui est ensuite injecté à travers la valve 4b produit le gonflement du soufflet 4, dont la paroi inférieure 4c vient alors s'appliquer sur la paroi externe de la conduite 2-2a comme cela apparaît sur la figure 3. Dès cet instant, la conduite 2-2a est serrée fortement par l'arceau 3 sur le fond sous-marin 1 et ce serrage est rendu permanent par la solidification du coulis à l'intérieur du soufflet 4.

La figure 4 représente un autre mode de réalisation destiné également à la pose de canalisations sur un fond dur et résistant. Dans ce mode de réalisation, les pieux 21 et 22 sont ancrés dans le sol, dans des trous 11 et 12 qui comme précédemment ont été forés et cimentés, l'arceau 3 étant glissé et guidé par les brides 13 de manière à venir épouser la partie supérieure de la canalisation. Lorsque l'arceau 3 repose sur la canalisation 2, on boulonne des contre-brides 14 sur les brides 13 puis l'on procède au gonflage du soufflet 4 par un produit approprié. On est ainsi sûr que la canalisation résistera à tous les courants, dans la mesure où le gonflage du soufflet permet d'appuyer en permanence et de maintenir le pipe-line 2 contre le sol sous-marin 1.

Lorsque le fond est constitué par une couche de sable épaisse, il est possible d'enterrer complètement la canalisation après creusement d'une tranchée et une fois enterrée la canalisation est insensible aux courants de fond. Un cas qui se présente relativement très fréquemment consiste toutefois dans la présence sur un fond rocheux d'une couche de sable de quelques décimètres. La solution proposée dans le mode de réalisation représenté sur les figures 1 à 4 est alors inopérante. En effet, lorsqu'un pipe-line repose sur du sable il se produit un affouillement permanent sous l'effet de la houle ou de divers courants. Ainsi, au cours du temps et sous l'influence de son propre poids le pipe-line descend et n'est plus maintenu convenablement par le dispositif d'ancrage. Il est indispensable que ladite conduite soit fermement maintenue en permanence or les forces latérales à reprendre par un ancrage peuvent atteindre 10 tonnes par exemple, les efforts latéraux dépassant fréquemment le frottement de la canalisation sur le fond. Selon une autre caractéristique de l'invention, on utilise la conduite elle-même pour tirer le dispositif d'ancrage vers le bas au fur et à mesure de la descente de la conduite sous l'effet de l'affouillement du sable.

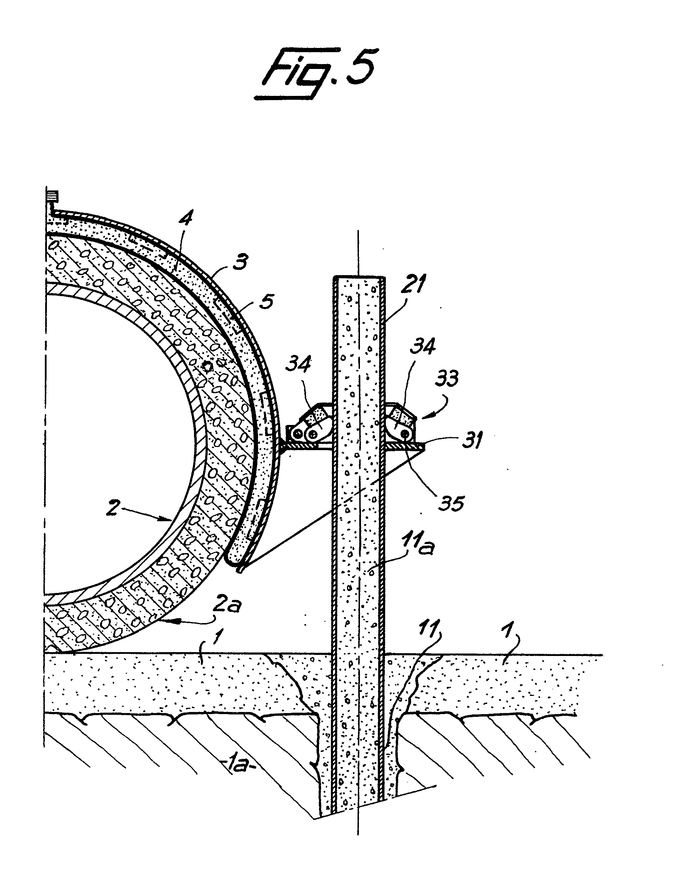

Les figures 5 à 13 sont relatives à ce mode de réalisation. Sur la figure 5, le pipe-line 2-2a repose sur un fond constitué par une couche de sable 1 reposant elle-même sur une plate-forme rocheuse 1a. Dans un trou de forage 11 cimenté, l'intérieur du pieu 21 est lui-même rempli de ciment 11a. Comme précédemment, une bride 31 est solidaire de l'arceau 3, on notera toutefois que cet arceau 3 se prolonge au-dessous de la ligne diamétrale de la canalisation, il est en effet nécessaire qu'il existe une solidarisation de l'arceau et de la canalisation en direction verticale vers le bas. La bride 31 est soudée par exemple sensiblement selon le diamètre de la canalisation 2-2a. Selon une caractéristique de l'invention, la bride 31 est équipée de moyens antiretour unidirectionnels désignés d'une manière générale par 33. Ce mécanisme 33 se compose de deux mâchoires 34 articulées autour d'axes 35 montés dans une chape. La bride 31 comporte une ouverture oblongue qui permet une introduction plus facile de la bride 31 autour du pieu 21 qui est scellé dans le fond rocheux 1a. Les mâchoires 34 peuvent pivoter vers le haut ce qui permet à la bride de descendre sur le pieu. Par contre, lorsqu'elles sont en contact avec ledit pieu toute possibilité de pivotement vers le bas leur est interdite par la forme même de la mâchoire. Le procédé d'ancrage utilisant un tel dispositif est le suivant :

Après forage des trous 11 puis scellement des pieux 21 on glisse l'arceau et ses deux brides sur les deux pieux. Puis, le soufflet 4 est rempli comme précédemment d'un coulis de ciment ou de tout autre matériau approprié qui lors de son durcissement assure la solidarisation de l'arceau 3 et de la canalisation 2-2a qui est ainsi en quelque sorte verrouillée à l'intérieur de l'arceau. L'action des mâchoires 34 s'oppose alors à tout mouvement ascendant de la canalisation alors qu'elle permet le mouvement de descente de celle-ci vers le bas. La canalisation 2-2a reste ainsi appliquée sur le sol même lorsque le sable qui se trouve au-dessous migre vers d'autres endroits. On notera par ailleurs que la souplesse des arceaux permet de compenser des petites déformations éventuelles ou l'amortissement de vibrations. On évite ainsi par le dispositif objet de l'invention l'opération d'extraction de la couche de sable qui est toujours difficile et par suite coûteuse.

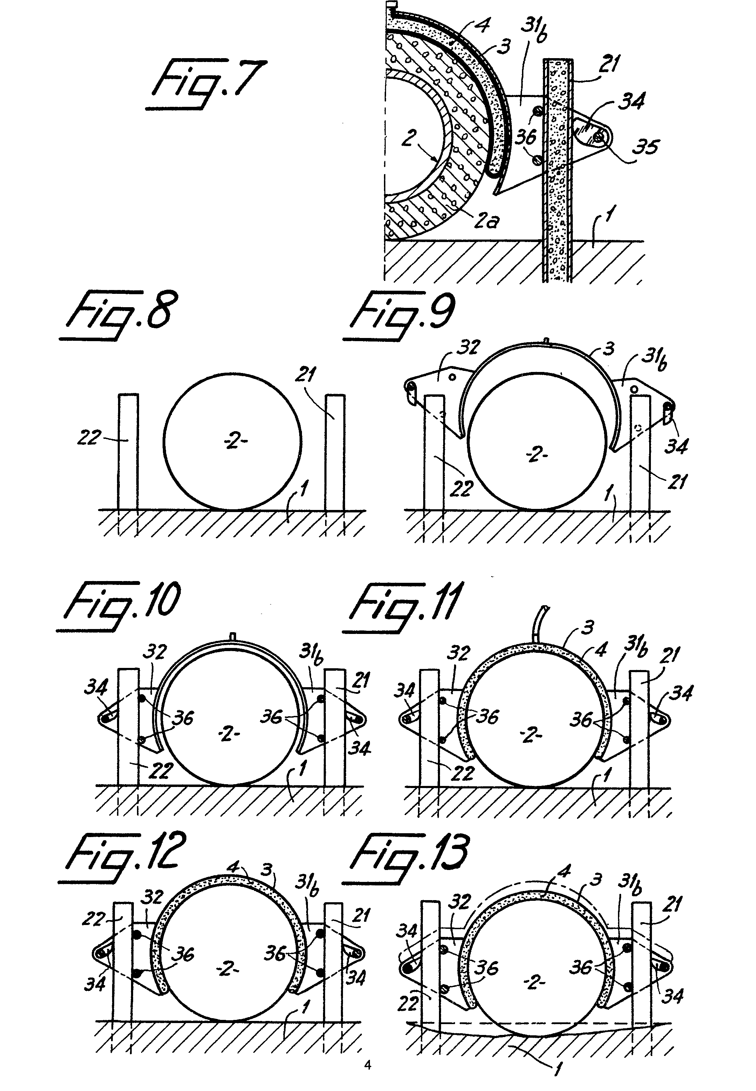

Les figures 6 et 7 représentent un mode de réalisation légèrement différent dans lequel une seule pièce 34 assure la fonction antiretour. Les références utilisées précédemment ont été conservées et l'on voit que la bride 31 se compose maintenant de deux pièces 31a et 31b qui occupent des positions verticales et qui sont comme précédemment soudées sur l'arceau 3 et réunies entre elles par des boulons d'entretoises jouant le rôle de tige de guidage 36.

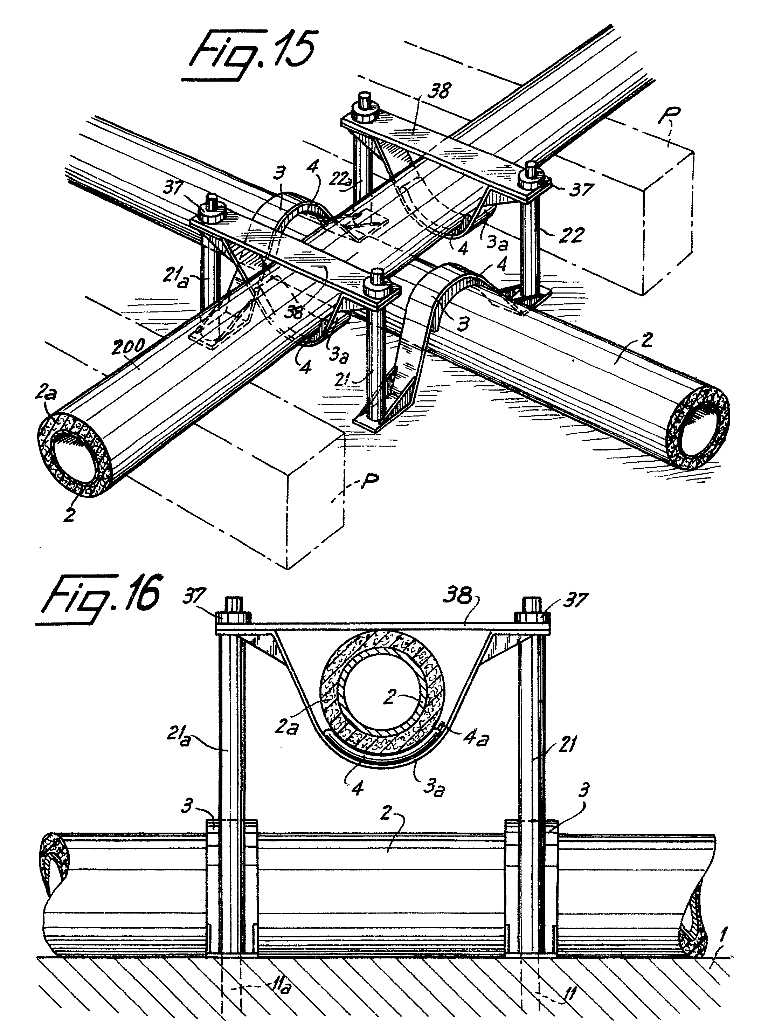

Les figures 8 à 13 sont des schémas permettant de suivre l'évolution de la pose d'un dispositif d'ancrage selon l'invention et de son fonctionnement ultérieur. La figure 8 représente le pipe-line 2 qui est entouré de deux pieux 21 et 22 scellés dans le sol 1. L'opération suivante est représentée sur la figure 9 sur laquelle l'arceau 3 et ses brides 31 et 32 sont glissés sur les pieux 21 et 22 jusqu'à ce que l'arceau 3 vienne reposer sur la canalisation 2. Les pièces antiretour ou cliquets 34 pendent librement sur leurs axes.

Dans l'étape ultérieure qui est celle représentée sur la figure 10, on a introduit dans leurs orifices deux tiges de guidage 36 et, sur chaque bride le cliquet 34 est en position de verrouillage par rotation, position de verrouillage dans laquelle il vient porter contre le pieu correspondant. La figure 11 représente l'opération suivante au cours de laquelle la poche ou soufflet, est remplie d'un produit durcissable tel que du ciment ou une résine époxy par exemple. Au cours de cette opération, il est possible d'introduire ce produit sous pression de manière à tester la résistance des piles et s'assurer que celles-ci sont convenablement ancrées dans le sol. Puis, la pression est réduite à la pression de durcissage.

Sur la figure 12 le dispositif est en position d'utilisation et toutes les charges verticales et horizontales sont transmises directement sur les pieux et par là même à la fondation sans introduire de force de striction. Comme cela apparaît sur la figure 13, lorsque le sol est affouillé, le pipe-line descend sous son propre poids en entraînant avec lui l'arceau 3 et l'ensemble passe de la position représentée en traits mixtes sur la figure à la position représentée en traits pleins de sorte que la canalisation reste fermement maintenue à tout moment.

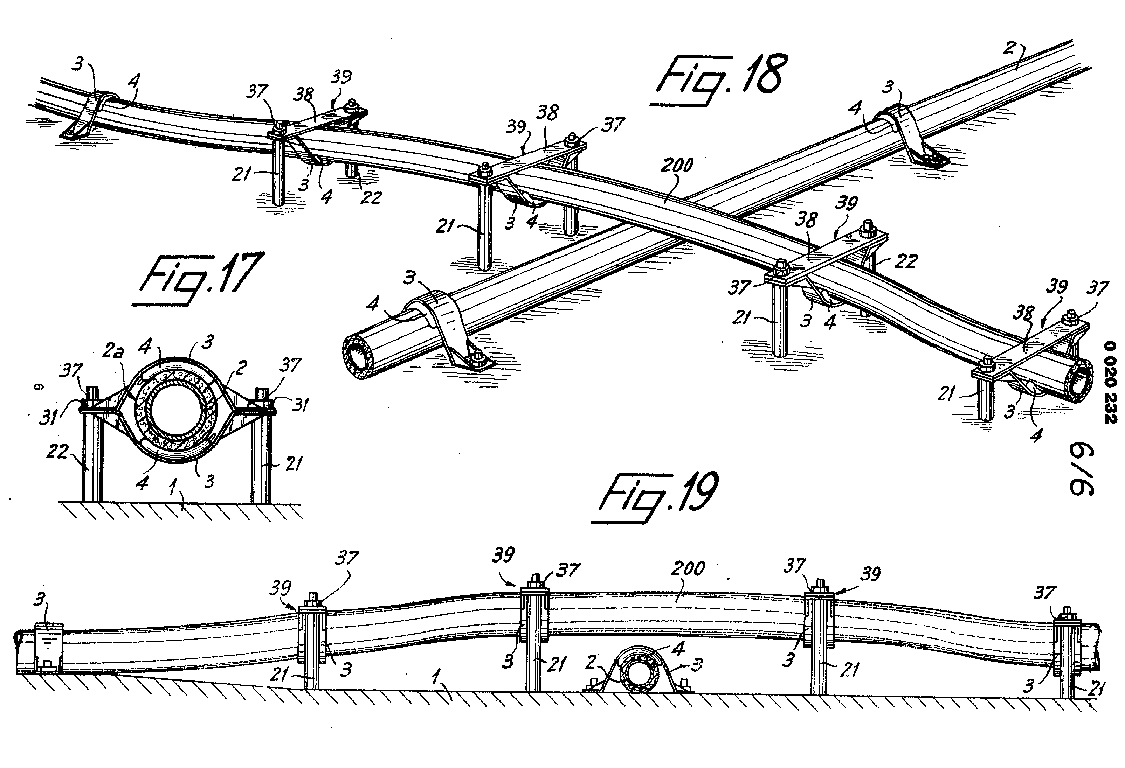

Les figures 14 à 19 sont plus particulièrement relatives à la solution des problèmes résultant des irrégularités de surface du fond sous-marin.

La figure 14 représente un mode de réalisation dans lequel la canalisation 2-2a est supportée par des arceaux dont un seul est représenté sur la figure ledit arceau 3 étant fixé de part et d'autre de la canalisation sur des pieux 21 et 22 ancrés dans le sol et scellés dans des trous de forage. De préférence l'arceau 3 enveloppe la canalisation sur les trois quarts de la périphérie de manière à le maintenir aussi bien contre les forces s'exerçant dans une direction verticale vers le bas que contre des forces qui tendraient à le soulever. Comme précédemment une poche ou soufflet 4 est prévue à l'intérieur de l'arceau et peut être solidarisée avec celui-ci afin de réaliser un verrouillage de l'arceau sur la canalisation. L'arceau 3 est relié mécaniquement aux pieux 21 et 22 par des brides 13 et contrebrides 14 qui peuvent être boulonnées ou rivetées. Le mode de montage d'un tel support d'ancrage sera mentionné ultérieurement car il est bien évident qu'il n'est pas toujours aisé de faire passer l'arceau au-dessous du pipe-line.

Sur la figure 15, le pipe-line inférieur 2 repose sur le fond sous-marin 1 et est ancré sur celui-ci avant la pose du second pipe-line 200. Avant la pose du second pipe-line, le pipe-line 2 est de préférence ancré comme cela a été décrit précédemment. De préférence, les quatre pieux 21, 22, 21a et 22a sont disposés selon un quatrilatère entourant d'une part le pipe-line 2 et d'autre part le pipe-line 200. Dans ce mode de réalisation, les trous de forage non représentés sont plus profonds que précédemment et les pieux 21, 22, 21a et 22a font saillie sur une plus grande hauteur que précédemment à partir du sol. En effet ces pieux vont servir non seulement à l'ancrage du pipe-line inférieur mais également à l'ancrage du pipe-line supérieur 200 qui sur la figure 15 croise le pipe-line inférieur dans une direction sensiblement perpendiculaire mais qui pourrait éventuellement le croiser selon une direction quelconque les ancrages des deux pipe-lines devenant alors indépendants l'un de l'autre. A cet effet, deux arceaux 3a à concavité tournée vers le haut sont disposés parallèlement à la direction du pipe-line inférieur 2 de manière à constituer une sorte de berceau pour le pipe-line supérieur 200. Comme précédemment, les arceaux 3a comportent dans leur partie inférieure un sac ou soufflet gonflable qui peut être rempli par un fluide durcissable sous pression. L'injection du coulis dans le corps gonflable 4 permet d'obtenir très aisément un effet de vérin. Par suite, il est possible de soulever le pipe-line 5 très facilement puisque l'on sait que la force appliquée est égale au produit de la pression par la surface sur laquelle s'exerce cette pression or, la surface de contact entre le corps gonflable 4 et la canalisation 200 est bien déterminée. Il suffit donc pour obtenir la force désirée d'introduire le coulis de produit durcissable dans la membrane 4 sous une pression déterminée. Sur la figure 15, les deux pipe-lines 2 et 200 sont représentés en position ancrée. Pour arriver à ce résultat, on procède de la façon suivante :

On dispose de part et d'autre du pipe-line 2 des poutre P représentées en traits mixtes sur la figure dans la région d'immersion du pipe-line 200 de sorte que dans un premier temps ce pipe-line repose sur les poutres P dont la hauteur est supérieure au diamètre du pipe-line 2. La présence de ces poutres évite toute portée du pipe-line 200 sur le pipe-line 2. Les arceaux sont alors passés au-dessous de la canalisation 200 et sont glissés sur les pieux 21, 22, et 21a, 22a respectivement. Des brides 38 peuvent être disposées au-dessus de la canalisation 200 pour la maintenir contre les efforts qui tendraient à la soulever ces brides 38 étant boulonnées sur les pieux par des écrous 37. Après fixation des arceaux 3a sur les quatre pieux, on procède au gonflage des membranes 4 ce qui soulève le pipe-line 200 par rapport aux poutres P. Celles-ci peuvent alors être retirées puisqu'elles ne sont plus en contact avec le pipe-line 200.

La figure 16 est une coupe par un plan vertical perpendiculaire au pipe-line 200 montrant la position relative des différents éléments.

La figure 17 représente un autre mode d'ancrage de canalisation reposant sur le même principe c'est-à-dire que deux arceaux 3 disposés en regard l'un par rapport à l'autre sont fixés par des brides 31 sur deux pieux 21 et 22. Comme précédemment des membranes gonflables sont interposées entre la coque de béton 2a de la canalisation 2 et les arceaux 3. Des écrous 37 viennent verrouiller l'ensemble en position verticale.

Les figures 18 et 19 représentent une autre possibilité d'aménagement du point de croisement de pipe-lines dans laquelle les deux pipe-lines sont ancrés indépendamment l'un de l'autre. Sur ces figures, les mêmes références désignent les mêmes éléments c'est-à-dire que le pipe-line 2 doit passer au-dessous du pipe-line 200. Le pipe-line 2 est ancré dans le sol au voisinage du croisement par deux arceaux 3 à l'intérieur desquels sont fixées des membranes gonflables 4. Le pipe-line 200 est par ailleurs ancré sur le fond sous-marin par un ensemble de dispositifs qui comportent chacun un arceau 3 à concavité tournée vers le bas ou vers le haut sur lesdits pieux. Dans tous les cas une membrane reposant sur des pieux 21, 22 ou fixé simplement gonflable est interposée entre l'arceau et la canalisation. Dans le cas des arceaux à concavité tournée vers le haut, l'effet de vérin permettant de soulever le pipe-line sur une faible hauteur est identique à celui qui a été mentionné précédemment. La position du pipe-line 200 sur ses supports à concavité tournée vers le haut 39 peut être verrouillée par des brides 38 vissées sur les pieux 21 et 22 par des écrous 37. On remarquera qu'en agissant sur la hauteur des pieux et en montant plus ou moins le pipe-line par gonflage du sac, il est possible de compenser les irrégularités du terrain de manière à ajuster le profil du pipe-line selon un parcours adéquat. Bien entendu, lorsque l'on trouve en dehors des points de croisement un sol dur et résistant on utilisera de préférence un ancrage du type de celui qui a été décrit en regard des figures 1 et 4 et dans le cas où un terrain dur est recouvert d'une couche peu épaisse de sable on y pourra utiliser l'ancrage qui a été décrit en regard des figures 5 à 13. Lorsque la couche de sable est suffisamment épaisse, le pipe-line pourra être enterré dans une tranchée.

La présente invention permet donc d'assurer l'ancrage de canalisations telles que des pipe-lines indépendamment de la nature du sol sur lequel sont posés ces pipe-lines et même, lorsqu'il y a croisement de canalisations. Il est bien évident que la présente invention n'est nullement limitée aux modes de réalisation qui viennent d'être décrits et représentés. C'est ainsi que l'on a parlé de la solidification du produit injecté dans le corps gonflable. Cette solidification est toutefois facultative et le produit de gonflement pourrait sans inconvénient garder en permanence l'état pâteux même liquide. Le produit gonflant peut être un des produits connus dont le gonflement résulte par exemple d'une réaction chimique ou de l'action d'un agent approprié. L'utilisation d'une masse d'un produit gonflant de ce genre dont le gonflement donne lieu à un produit solide, éventuellement poreux peut aussi être envisagé dans le cas de la présente invention. Bien entendu le procédé et les dispositifs qui viennent d'être décrits peuvent être utilisés pour fixer une conduite quelconque sur un support quelconque par exemple en béton ou bien sur le sol terrestre. En tout état de cause, les travaux difficiles à effectuer au fond de la mer (serrage, blocage etc...) sont réduits au minimum puisque l'injection de coulis de ciment ou autres matériaux solidifiables est très aisée et que le blocage des brides sur les pieux peut être réalisé automatiquement. L'introduction d'un corps à l'état fluide sous pression permet par ailleurs d'une part de tester la résistance des pieux en appliquant dans un premier temps une suppression ce qui compte tenu des conditions difficiles de maintenance du pipe-line constitue un avantage notable. Les essais réalisés sur les pieux sous des poussées verticales ou latérales peuvent être réalisés sans perte de temps dans la procédure normale d'installation.

## Revendications

1. Procédé d'ancrage de canalisations (2, 2a, 200) telles que des pipe-lines, par rapport à des sols (1, 1a), en particulier des fonds sous-marins, au moyen d'arceaux (3) destinés chacun à entourer au moins une partie de la périphérie d'une canalisation (2, 2a, 200) et à être relié à un sol (1, 1a) par des pieux (21, 22, 21a, 22a) destinés à être fixés dans le sol, caractérisé en ce qu'il consiste successivement, à chaque point d'ancrage,

— à forer des trous d'ancrage (11, 12) dans le sol de part et d'autre de chaque canalisation (2, 2a, 200),

— à sceller des pieux (21, 22, 21a, 22a) dans lesdits trous (11, 12),

— à disposer, autour d'au moins une partie de la périphérie de la canalisation (2, 2a, 200) une partie médiane cintrée (3a) d'au moins un arceau (3) muni de moyens de fixation latéraux (3c1, 3c2, 13, 14, 31, 31a, 31b, 33, 34, 35), et à disposer un corps gonflable (4) à l'état dégonflé entre la canalisation (2, 2a, 200) et ladite partie cintrée (3a) de chaque arceau (3),

— à fixer les moyens de fixation latéraux de chaque arceau (3) auxdits pieux (21, 22), et

— à injecter un produit de remplissage, qui peut être solidifiable, dans ledit corps gonflable (4) afin d'obtenir un effet de vérin qui déplace la canalisation (2, 2a, 200) par rapport au sol, aux pieux (21, 22) et à chaque arceau (3), dans sa position d'ancrage, soit vers le sol, soit dans le sens opposé selon que la concavité de l'arceau (3) est dirigée vers le bas ou vers le haut.

2. Procédé selon la revendication 1, destiné à l'ancrage d'une première canalisation (200) à une certaine hauteur au-dessus du sol (1), en particulier au point de croisement de cette première canalisation (200) avec au moins une seconde canalisation (2) disposée sous la première, caractérisé en ce qu'il consiste de plus :

— à poser la première canalisation (200) sur des supports (P) disposés de part et d'autre de la zone ou la première canalisation (200) doivent être ancrées à ladite hauteur au-dessus du sol (1), en particulier de part et d'autre de la seconde canalisation (2) au point de croisement la hauteur des supports (P) étant supérieure au diamètre externe de la seconde canalisation (2, 2a),

— à disposer sous la première canalisation (200) ladite partie centrale cintrée (3a) d'au moins un arceau (3) dont la concavité est tournée vers le haut, et

— à soulever la première canalisation (200) vers le haut par rapport au sol (1), aux pieux (21, 22, 21a, 22a), aux arceaux (3) et aux supports (P) par l'injection dudit produit de remplissage dans les corps gonflables (4) correspondants, et éventuellement enfin,

— à retirer les supports (P).

3. Procédé selon la revendication 2, caractérisé en ce qu'il consiste de plus, après avoir soulevé la première canalisation (200) vers le haut dans sa position d'ancrage, à disposer sur la première canalisation (200) au moins une bride (38) pour chaque arceau (3) , et

— à fixer chaque bride (38) aux pieux (21, 22) auxquels les moyens de fixation latéraux des arceaux correspondants (3) sont fixés.

4. Procédé selon la revendication 2, caractérisé en ce qu'il consiste de plus,

— à disposer sur la première canalisation et en opposition avec chaque arceau (3) la partie médiane cintrée (3a) d'un autre arceau (3), dont la concavité est dirigée vers le bas, et qui est également muni de moyens de fixation latéraux, et à disposer un autre corps gonflable (4) à l'état dégonflé entre la première canalisation et ladite partie cintrée de l'autre arceau (3),

— à fixer les moyens de fixation latéraux de l'autre arceau (3) aux pieux (21, 22), et

— à injecter un produit de remplissage dans cet autre corps gonflable (4), afin de verrouiller rigidement la première canalisation entre les deux arceaux (3) en opposition.

5. Procédé selon la revendication 1, caractérisé en ce qu'il consiste de plus

— à injecter le produit de remplissage dans le corps gonflable (4) tout d'abord à une surpression par rapport à la pression de remplissage définitive, afin de tester la résistance des pieux (21, 22) et de s'assurer qu'ils sont convenablement ancrés dans le sol (1, 1a), puis

— à réduire la pression à la valeur de la pression de remplissage définitive.

6. Dispositif d'ancrage de canalisations (2, 2a, 200) telles que des pipe-lines, par rapport à des sols (1, 1a), en particulier des fonds sous-marins, comprenant pour chaque point d'ancrage, une paire de pieux (21, 22) destinés à être fixés dans le sol (1, 1a) de part et d'autre de la canalisation (2, 2a, 200), et au moins un arceau (3) muni d'une partie médiane cintrée (3a), destinée à recouvrir au moins une partie de la périphérie d'une canalisation (2, 2a, 200) et de moyens de fixation latéraux (3c1, 3c2, 13, 14, 31, 31a, 31b, 33, 34, 35) destinés à fixer l'arceau (3) aux pieux (21, 22) caractérisé en ce qu'il comprend de plus, pour chaque arceau (3), au moins un corps gonflable (4), fixé dans la concavité de la partie médiane cintrée (3a) de l'arceau (3) correspondant par des moyens de fixation (5) et dont les parois sont réalisées en un matériau souple, chaque corps gonflable (4) étant de plus muni d'une valve (4b) destinée à l'injection dans le corps (4) d'un produit de remplissage, éventuellement solidifiable, tel qu'un coulis de ciment.

7. Dispositif selon la revendication 6, caractérisé en ce que les moyens de fixation latéraux (3c1, 3c2) coopèrent de chaque côté de l'arceau (3) avec une bride annulaire (31, 32) solidaire de l'un des pieux (21, 22), et qui serre les moyens de fixation latéraux (3c1, 3c2) correspondants contre le sol (1) lorsque le pieu correspondant (21, 22) est ancré dans le sol (1), l'arceau (3) étant disposé sur la canalisation (2, 2a) en présentant sa concavité vers le bas.

8. Dispositif selon la revendication 6, caractérisé en ce que les moyens de fixation latéraux comprennent de chaque côté de l'arceau (3) une bride (13) destinée à s'appliquer contre l'un des pieux (21, 22) et sur laquelle se boulonne une contre-bride (14) afin de fixer l'arceau (3) aux pieux (21, 22) ancrés dans le sol (1).

9. Dispositif selon la revendication 6, caractérisé en ce que la partie médiane cintrée (3a) de chaque arceau (3) et, de préférence, également, chaque corps gonflable (4) correspondant s'étendent sur plus de la moitié de la périphérie de la canalisation (2, 2a, 200) afin d'assurer un verrouillage rigide de cette dernière et de chaque arceau (3) après le remplissage de chaque corps gonflable (4).

10. Dispositif selon la revendication 9, caractérisé en ce que les moyens de fixation latéraux comprennent de chaque côté de l'arceau (3) un ensemble anti-retour unidirectionnel (33).

11. Dispositif selon la revendication 10, caractérisé en ce que chaque ensemble anti-retour unidirectionnel (33) comprend une bride (31) destinée à coulisser le long de l'un des pieux (21, 22), deux mâchoires (34) montées sur la bride (31), et dont l'une au moins est montée pivotante autour d'un axe (35) sensiblement perpendiculaire au pieu (21, 22) correspondant, et appliquée contre le pieu (21, 22) correspondant afin de s'opposer à tout mouvement de la canalisation (2, 2a) dans un sens tout en permettant un mouvement de la canalisation dans l'autre sens.

12. Dispositif selon la revendication 10, caractérisé en ce que chaque ensemble anti-retour unidirectionnel comprend deux brides (31a, 31b) espacées, sensiblement parallèles au pieu (21, 22) correspondant en position de coopération avec ce dernier, et reliées par au moins une tige de guidage (36) du pieu (21, 22) correspondant, et une seule pièce (34) montée pivotante entre les deux brides (31a, 31b) sur un axe sensiblement perpendiculaire au pieu correspondant (21, 22) et destinée à pivoter dans une position de verrouillage dans laquelle elle est appliquée contre le pieu (21, 22) correspondant afin de s'opposer à tout mouvement de la canalisation (2, 2a) dans un sens tout en permettant un mouvement dans l'autre sens.

13. Dispositif selon la revendication 6, caractérisé en ce que l'arceau (3) présente sa concavité tournée vers le haut et se trouve suspendu et fixé par ses moyens de fixation latéraux (13, 14) aux extrémités supérieures des deux pieux (21, 22) correspondants, et, de préférence, en ce qu'une bride (38) est disposée sur la canalisation (2, 2a) et est fixée aux extrémités supérieures des deux pieux (21, 22).

14. Dispositif selon la revendication 6, caractérisé en ce qu'il comprend deux arceaux (3) présentant respectivement leur concavité tournée vers le haut et vers le bas, et destinés à être fixés en opposition par leurs moyens de fixation latéraux (31) sur les deux pieux (21, 22) correspondants de manière à entourer complètement la canalisation (2, 2a).

15. Dispositif selon la revendication 6, caractérisé en ce que deux paires d'arceaux (3) sont fixés sur quatre pieux (21, 21a, 22, 22a) deux des arceaux (3) présentant leur concavité tournée vers le haut, afin de soutenir une première canalisation (200) qui passe au-dessus d'une seconde canalisation (2), et les deux autres arceaux (3) présentant leur concavité tournée vers le bas afin de maintenir la première canalisation (2) contre le sol (1).

**Claims**

1. Method of anchoring conduits (2, 2a, 200) such as pipelines, on grounds (1, 1a) and in particular sea-beds, using hoop-like members or brackets (3), each one being designed to encircle at least part of the periphery of a conduit (2, 2a, 200) and to be joined to a ground (1, 1a) by way of posts (21, 22, 21a, 22a) which are sunk therein, characterised in that it successively consists, at every anchoring point :
— in drilling anchoring holes (11, 12) into the ground on either side of each conduit (2, 2a, 200),
— in fixing posts (21, 22, 21a, 22a) into said holes (11, 12),
— in placing about at least part of the periphery of the conduit (2, 2a, 200) the curved middle part (3a) of at least one bracket (3) equipped with lateral fastening means (3c1, 3c2, 13, 14, 31, 31a, 31b, 33, 34, 35), and in placing an inflatable body (4) in a deflated state between the conduit (2, 2a, 200) and said curved part (3a) of every bracket (3),
— in fixing the lateral fastening means of every bracket (3) to said posts (21, 22), and
— in injecting a filling product, optionally solidifiable, into said inflatable body (4) with a view to creating a jack effect which moves the conduit (2, 2a, 200) with respect to the ground, to the posts (21, 22) and to each bracket (3), in its anchoring position, either towards the ground, or in the opposite direction, depending on whether the concavity of the bracket (3) is directed downwards or upwards.

2. Method according to claim 1, intended for anchoring a first conduit (200) at a certain height from the ground (1), and in particular at the point of intersection of said first conduit (200) with at least a second conduit (2) situated unter the first, characterised in that it further consists :
— in laying the first conduit (200) on supports (P) provided on either side of the area where said first conduit (200) is to be anchored at said height above the ground (1), and in particular on either side of the second conduit (2) at said intersection point, the height of said supports (P) being greater than the external diameter of the second conduit (2, 2a),
— in placing under the first conduit (200) the said curved middle part (3a) of at least one bracket (3) whose concavity faces upwards, and
— in raising up the first conduit (200) with respect to the ground (1), to the posts (21, 22, 21a, 22a), to the brackets (3) and to the supports (P) by injecting said filling product into the corresponding inflatable bodies (4) and finally and optionally,
— in removing the supports (P).

3. Method according to claim 2, characterised in that it further consists, after raising up the first conduit (200) to its anchoring position, in placing on said first conduit (200) at least one tie-piece (38) for every bracket (3), and
— in fastening each tie-piece (38) to the posts (21, 22) to which the lateral fastening means of the corresponding brackets are fixed.

4. Method according to claim 2, characterised in that it further consists,
— in placing on the first conduit, and reversedly to every bracket (3), the curved middle part (3a) of another bracket (3), whose concavity faces downwards, and which is also equipped with lateral fastening means, and in placing another inflatable body (4) in the deflated state between the first conduit and said curved part of the other bracket (3),
— in fixing the lateral fastening means of the other bracket (3) to the posts (21, 22), and
— in injecting a filling product in said other inflatable body (4), with a view to rigidly locking the first conduit in position between the two brackets (3) in opposite relation.

5. Method according to claim 1, characterised in that it further consists,
— in first injecting the filling product in the inflatable body (4) at a higher pressure than the definitive filling pressure, in order to test the strength of the posts (21, 22) and to make sure that they are adequately anchored in the ground (1, 1a), and then

— in reducing the pressure to the value of the definitive filling pressure.

6. Apparatus for anchoring conduits (2, 2a, 200) such as pipelines, on grounds (1, 1a) and in particular on sea-beds, comprising for every anchoring point, a pair of posts (21, 22) designed to be sunk into the ground (1, 1a) on either side of the conduit (2, 2a, 200), and at least one bracket (3) having a curved middle part (3a), designed to cover at least part of the periphery of a conduit (2, 2a, 200) and lateral fastening means (3c1, 3c2, 13, 14, 31, 31a, 31b, 33, 34, 35) designed to fix the bracket (3) to the posts (21, 22), characterised in that it further comprises, for every bracket (3), at least one inflatable body (4) fixed in the concavity of the curved middle part (3a) of the corresponding bracket (3) by way of fastening means (5) and of which the walls are produced in supple material, each inflatable body (4) being further equipped with a valve (4b) for injecting into the body (4) a filling product which is optionally solidifiable, such as a cement grout.

7. Apparatus according to claim 6, characterised in that the lateral fastening means (3c1, 3c2) cooperate on each side of the bracket (3) with an annular flange (31, 32) integral with one of the posts (21, 22) and which clamp the corresponding lateral fastening means (3c1, 3c2) on the ground (1) when the corresponding post (21, 22) is anchored in the ground (1), the bracket (3) being placed on the conduit (2, 2a) with its concavity facing downwards.

8. Apparatus according to claim 6, characterised in that the lateral fastening means comprise, on each side of the bracket (3), a flange (13) designed to be applied against one of the posts (21, 22) and on which is bolted a counter-flange (14) in order to secure the bracket (3) with the posts (21, 22) anchored in the ground (1).

9. Apparatus according to claim 6, characterised in that the curved middle part (3a) of every bracket (3) and preferably also, every corresponding inflatable body (4) extend over more than half the periphery of the conduit (2, 2a, 200) in order to ensure a rigid locking of the latter with every bracket (3) after filling every inflatable body (4).

10. Apparatus according to claim 9, characterised in that the lateral fastening means comprise on each side of the bracket (3) a unidirectional non-return assembly (33).

11. Apparatus according to claim 10, characterised in that every unidirectional non-return assembly (33) comprises a flange (31) designed to slide along one of the posts (21, 22) two jaws (34) mounted on said flange (31) one of which at least is mounted for pivoting about an axis (35) which is substantially perpendicular to the corresponding post (21, 22) in order to oppose any movement of the conduit (2, 2a) in one direction, whilst allowing the conduit to move in the other direction.

12. Apparatus according to claim 10, characterised in that every unidirectional non-return assembly comprises two spaced apart flanges (31a, 31b) which are substantially parallel to the corresponding post (21, 22) when in a position of cooperation therewith, and are joined together by at least one guiding pin (36) of the corresponding post (21, 22), and a single piece (34) mounted for pivoting between the two flanges (31a, 31b) about an axis substantially perpendicular to the corresponding post (21, 22) and designed to pivot between a locking position in which it is applied against the corresponding post (21, 22) in order to oppose any movement of the conduit (2, 2a) in one direction whilst allowing a movement in the other direction.

13. Apparatus according to claim 6, characterised in that the concavity of the bracket (3) is facing upwards so that said bracket is suspended and secured by its lateral fastening means (13, 14) to the upper ends of the two corresponding posts (21, 22) and, preferably, in that a tie-piece (38) is placed on the conduit (2, 2a) and is secured to the upper ends of the two posts (21, 22).

14. Apparatus according to claim 6, characterised in that it comprises two brackets (3) whose concavities face upwards and downwards respectively, said brackets being designed to be fixed in opposite relation by their lateral fastening means (31) on the two corresponding posts (21, 22) in such a way as to completely encircle the conduit (2, 2a).

15. Apparatus according to claim 6, characterised in that two pairs of brackets (3) are fixed on four posts (21, 21a, 22, 22a) the concavity of two of the brackets (3) facing upwards, in order to support a first conduit (200) passing above a second conduit (2), the concavity of the other two brackets (3) facing downwards in order to hold the first conduit (2) against the ground (1).

## Ansprüche

1. Verfahren zur Verankerung von Leitungen (2, 2a, 200) wie beispielsweise Pipelines am Boden (1, 1a), insbesondere am Meeresboden, wobei bogenförmige Bügel (3) verwendet werden, die jeweils mindestens einen Teil des Umfanges einer Leitung (2, 2a, 200) umgreifen und mit Pfählen (21, 22, 21a, 22a) die im Boden befestigt werden, am Boden (1, 1a) festgelegt werden, gekennzeichnet durch folgende an jeden Verankerungspunkt nacheinander vorzunehmende Verfahrensschritte :

— Vorbohren von Verankerungslöchern (11, 12) im Boden und zu beiden Seiten jeder Leitung (2, 2a, 200) ;

— Einmauern der Pfähle (21, 22, 21a, 22a) in diesen Löchern (11, 12) ;

— Anordnen eines mittleren gebogenen Teiles (3a) mindestens eines bogenförmigen Bügels (3) um mindestens einen Teil des Umfanges der Leitung (2, 2a, 200), wobei der bogenförmige Bügel (3) mit seitlichen Befestigungsmitteln (3c1, 3c2, 13, 14, 31, 31a, 31b, 33, 34, 35) ausgerüstet ist sowie Anordnen eines aufblasbaren Körpers (4) im nicht aufgeblasenen Zustand zwischen der Leitung (2, 2a, 200) und dem gebogenen Teil (3a) jedes bogenförmigen Bügels (3) ;

— Befestigen der seitlichen Befestigungsmittel jedes bogenförmigen Bügels (3) an den Pfählen (21, 22) und

— Hereindrücken eines Füllmateriales, das sich verfestigen kann, in den aufblasbaren Körper (4) um einen Klemmeffekt zu erreichen, der die Leitung (2, 2a, 200) gegenüber dem Boden, gegenüber den Pfählen (21, 22) und gegenüber jedem bogenförmigen Bügel (3) in ihre Verankerungslage verschiebt, und zwar entweder in Richtung zum Boden oder in der entgegengesetzten Richtung, je nachdem, ob die konkave Seite des bogenförmigen Bügels (3) nach unten oder nach oben gerichtet ist.

2. Verfahren nach Anspruch 1 zur Verankerung einer ersten Leitung (200) in einer bestimmten Höhe über dem Boden (1), insbesondere an einem Kreuzungspunkt dieser ersten Leitung (200), mit mindestens einer zweiten Leitung (2), die unterhalb der ersten angeordnet ist, dadurch gekennzeichnet, daß außerdem folgende Schritte vorgesehen sind :

— Anordnen der ersten Leitung (200) auf Unterlagen (P), die beidseitig von dem Bereich angeordnet sind, in dem die erste Leitung (200) in der angegebenen Höhe über dem Boden (1) verankert werden soll, insbesondere zu beiden Seiten der zweiten Leitung (2) im Bereich des Kreuzungspunktes, wobei die Höhe der Unterlagen (P) etwas größer als der Außendurchmesser der zweiten Leitung (2, 2a) ist ;

— Anordnen des mittleren gebogenen Teiles (3a) mindestens eines bogenförmigen Bügels (3) unterhalb der ersten Leitung (200), wobei der konkave Teil nach oben gerichtet ist und

— Anheben der ersten Leitung (200) nach oben gegenüber dem Boden (1), gegenüber den Pfählen (21, 22, 21a, 22a) und gegenüber dem bogenförmigen Bügel (3) und den Unterlagen (P) durch das Hereindrücken der Füllmasse in den entsprechenden aufblasbaren Körper (4) und schließlich eventuell

— Wegnehmen der Unterlagen (P).

3. Verfahren nach Anspruch 2, dadurch gekennzeichnet, daß außerdem nach dem Anheben der ersten Leitung (200) nach oben in ihre Verankerungslage auf der ersten Leitung (200) mindestens ein Klemmsteg (38) für jeden bogenförmigen Bügel (3) angeordnet wird und

— Befestigen jedes Klemmsteges (38) an den Pfählen (21, 22), an denen die seitlichen Befestigungsmittel der zugeordneten bogenförmigen Bügel (3) befestigt sind.

4. Verfahren nach Anspruch 2, dadurch gekennzeichnet, daß außerdem folgende Schritte vorgesehen sind :

— Anordnung des mittleren gebogenen Teiles (3a) eines anderen bogenförmigen Bügels (3) an der ersten Leitung und gegenüber von jedem bogenförmigen Bügel (3), wobei die konkave Seite des anderen Bügels nach unten gerichtet ist und dieser ebenfalls mit seitlichen Befestigungsmitteln ausgerüstet ist und

— Einfügen eines anderen aufblasbaren Körpers (4) im nicht aufgeblasenen Zustand zwischen der ersten Leitung und dem gebogenen Teil des anderen bogenförmigen Bügels (3),

— Befestigen der seitlichen Befestigungsmittel des anderen bogenförmigen Bügels (3) an den Pfählen (21, 22) und

— Eindrücken der Füllmasse in diesen anderen aufblasbaren Körper (4), um die erste Leitung fest zwischen den beiden gegenüberliegenden bogenförmigen Bügeln (3) zu verriegeln.

5. Verfahren nach Anspruch 1, dadurch gekennzeichnet, daß außerdem noch folgende Schritte vorgesehen sind :

— Hereindrücken der Füllmasse in den aufblasbaren Körper (4) mit einem höheren Druck, als es dem Druck bei der Endfüllung entspricht, um den Halt der Pfähle (21, 22) zu prüfen und um sicher zu sein, daß sie ausreichend im Boden (1, 1a) verankert sind und dann

— Verringern des Druckes bis auf den Endfülldruck.

6. Vorrichtung zur Verankerung von Leitungen (2, 2a, 200), wie beispielsweise Pipelines am Boden (1a), insbesondere am Meeresboden, die an jedem Verankerungspunkt aus einem Paar von Pfählen (21, 22) besteht, die im Boden (1, 1a) zu beiden Seiten der Leitung (2, 2a, 200) befestigt werden sowie aus mindestens einem bogenförmigen Bügel (3) mit einem gebogenen Mittelteil (3a), der mindestens einen Teil des Umfanges einer Leitung (2, 2a, 200) überdeckt und mit seitlichen Befestigungsmitteln (3c1, 3c2, 13, 14, 31, 31a, 31b, 33, 34, 35) versehen ist, mit dem der bogenförmige Bügel (3) an den Pfählen (21, 22) befestigbar ist, dadurch gekennzeichnet, daß außerdem für jeden bogenförmigen Bügel (3) mindestens ein aufblasbarer Körper (4) vorgesehen ist, der auf der konkaven Seite des mittleren gebogenen Teiles (3a) des zugeordneten bogenförmigen Bügels (3) mit Befestigungsmitteln (5) angebracht ist und dessen Wandungen aus einem nachgiebigen Material bestehen, wobei jeder aufblasbarer Körper (4) außerdem mit einem Ventil (4b) ausgerüstet ist, durch das in den Körper (4) eine Füllmasse, die eventuell verfestigbar ist, wie beispielsweise Zementbrühe, eingefüllt werden kann.

7. Vorrichtung nach Anspruch 6, dadurch gekennzeichnet, daß die seitlichen Befestigungsmittel (3c1, 3c2) auf jeder Seite des bogenförmigen Bügels (3) mit einem ringförmigen Klemmteil (31, 32) zusammenwirken, der einstückig mit einem der Pfähle (21, 22) ist und der die seitlichen Befestigungsmittel (3c1, 3c2) gegenüber dem Boden (1) verklemmt, sobald der zugeordnete Pfahl (21, 22) im Boden (1) verankert ist und der bogenförmige Bügel (3) über die Leitung (2, 2a) mit seiner konkaven Seite nach unten gelegt ist.

8. Vorrichtung nach Anspruch 6, dadurch gekennzeichnet, daß die seitlichen Befestigungsmittel auf jeder Seite des bogenförmigen Bügels (3) aus einem Klammerteil (13) bestehen, der sich an einem der Pfähle (21, 22) anlegt und gegenüber dem sich eine Gegenklammer (14) verklemmt, um den bogenförmigen Bügel (3) an den im Boden (1) verankerten Pfählen (21, 22) zu befestigen.

9. Vorrichtung nach Anspruch 6, dadurch gekennzeichnet, daß sich der mittlere gebogene Teil (3a) jedes bogenförmigen Bügels (3) und vorzugsweise auch jeder zugeordnete aufblasbare Körper (4) über mehr als die Hälfte des Umfanges der Leitung (2, 2a, 200) erstreckt, um eine feste Verankerung derselben und jedes bogenförmigen Bügels (3) nach dem Auffüllen jedes aufblasbaren Körpers (4) zu erreichen.

10. Vorrichtung nach Anspruch 9, dadurch gekennzeichnet, daß die seitlichen Befestigungsmittel auf jeder Seite des bogenförmigen Bügels (3) aus einer in einer Richtung wirkenden Rücklaufsperreinheit (33) bestehen.

11. Vorrichtung nach Anspruch 10, dadurch gekennzeichnet, daß jede in einer Richtung wirkende Rücklaufsperreinheit (33) einen Steg (31) besitzt, der längs eines der Pfähle (21, 22) gleiten kann, aus zwei an diesem Steg (31) montierten Backen (34), von denen mindestens eine schwenkbar um eine Achse (35) angeordnet ist, die im wesentlichen senkrecht zu dem zugeordneten Pfahl (21, 22) steht und die sich an dem zugeordneten Pfahl (21, 22) anlegt, um jede Bewegung der Leitung (2, 2a) in einer Richtung zu verhindern, eine Bewegung der Leitung der anderen Richtung jedoch zuzulassen.

12. Vorrichtung nach Anspruch 10, dadurch gekennzeichnet, daß jede in einer Richtung wirkende Rücklaufsperreinrichtung aus zwei im Abstand zueinander angeordneten und im wesentlichen parallel zu dem zugeordneten Pfahl (21, 22) ausgerichteten Stegen (31a, 31b) besteht, die mit dem zugeordneten Pfahl zusammenwirken und die mit mindestens einer Führungsstange (36) an dem zugeordneten Pfahl (21, 22) anliegen und durch ein einzelnes, zwischen den beiden Stegen (31a, 31b) auf einer im wesentlichen senkrecht zum zugeordneten Pfahl (21, 22) angeordneten Achse schwenkbaren einzelnen Stück (34), das in eine Verriegelungslage schwenkbar ist, in der es am zugeordneten Pfahl (21, 22) anliegt, um jede Bewegung der Leitung (2, 2a) in einer Richtung zu verhindern, eine Bewegung in der anderen Richtung jedoch zuzulassen.

13. Vorrichtung nach Anspruch 6, dadurch gekennzeichnet, daß der bogenförmige Bügel (3) mit seiner konkaven Seite nach oben gerichtet ist und durch seine seitlichen Befestigungseinrichtungen (13, 14) an den oberen Enden der beiden ihm zugeordneten Pfähle (21, 22) aufgehängt und befestigt ist und dadurch, daß vorzugsweise ein Steg (38) auf der Leitung (2, 2a) angeordnet ist und an den oberen Enden der beiden Pfähle (21, 22) befestigt ist.

14. Vorrichtung nach Anspruch 6, dadurch gekennzeichnet, daß zwei bogenförmige Bügel (3) vorgesehen sind, die jeweils mit ihrer konkaven Seite nach oben bzw. nach unten gerichtet sind und die mit ihren seitlichen Befestigungsmitteln (31) an den zwei zugeordneten Pfählen (21) gegenüberliegend so befestigt sind, daß sie die Leitung (2, 2a) vollkommen umfassen.

15. Vorrichtung nach Anspruch 6, dadurch gekennzeichnet, daß die beiden Paare der bogenförmigen Bügel (3) an vier Pfählen (21, 21a, 22, 22a) befestigt sind und daß zwei der bogenförmigen Bügel (3) mit ihrer konkaven Seite nach oben gerichtet sind, um eine erste Leitung (200) aufzunehmen, die über einer zweiten Leitung (2) verläuft und daß die beiden anderen bogenförmigen Bügel (3) mit ihrer konkaven Seite nach unten gerichtet sind, um die zweite Leitung (2) am Boden (1) zu halten.

_Fig. 1_

_Fig. 2_

_Fig. 3_

Fig.4

Fig.14

Fig.6

_Fig. 5_

0 020 232

Fig.7

Fig.8

Fig.9

Fig.10

Fig.11

Fig.12

Fig.13

4

*Fig.15*

*Fig.16*

Fig. 18

Fig. 17

Fig. 19